# EUROPEAN PATENT APPLICATION

(11) **EP 4 603 746 A1**
(43) Date of publication of application: **20.08.2025**
(21) Application number: 25158773.9
(22) Date of filing: 19.02.2025
(51) Int. Cl.: F21S 43/14, F21S 43/19, F21S 45/48, B60Q 1/26, F21W 107/17

(54) **LIGHTING DEVICE FOR VEHICLE**

(30) Priority: 19.02.2024 JP 2024022486
(71) Applicant: Mitsuba Corporation, Kiryu-shi, Gunma 376-8555 (JP)
(72) Inventor: MURAKOSHI, Tetsuya, Kiryu-shi, Gunma, 376-8555 (JP)
(74) Representative: Winter, Brandl - Partnerschaft mbB

(57) **Abstract**

Provided is a lighting device for vehicle that can efficiently release heat generated by a substrate on which a light source is mounted to the outside. The lighting device for vehicle includes a substrate (10) on which a light source (11A, 11B) is mounted, and a resin cover (20) covering the substrate. The resin cover has a concave portion (21) formed in a shape recessed in a direction approaching the substrate as viewed from the outside, and a heat conductive material (30) is disposed between the concave portion and the substrate. When the lighting device for vehicle is installed in a vehicle, the direction approaching the substrate as viewed from the outside is opposite to a travel direction of the vehicle. The concave portion is defined by a wall portion (23) extending with respect to the direction and has a cutout portion (24) where the wall portion is not formed.

## Description

### Technical Field

The present invention relates to a lighting device for vehicle.

### Related Art

Patent Literature 1 discloses a lighting device for vehicle, including a substrate on which a light source is mounted, and a housing to which the substrate is attached.

### Citation List

### Patent Literature

[Patent Literature 1] Japanese Patent Application Laid-Open No. 2022-133496

### SUMMARY OF THE INVENTION

### Problems to be Solved by the Invention

In the lighting device for vehicle as mentioned above, it is necessary to release the heat generated by the substrate on which the light source is mounted to the outside.

The present invention has been made to solve the above-mentioned problem, and aims to provide a lighting device for vehicle that can efficiently release the heat generated by the substrate on which the light source is mounted to the outside.

### Means for Solving the Problems

To solve the above-mentioned problem, one aspect of the present invention provides a lighting device for vehicle, including:
a substrate on which a light source is mounted; and
a resin cover covering the substrate,
in which the resin cover has a concave portion formed in a shape that is recessed in a direction approaching the substrate as viewed from outside, and
a heat conductive material is disposed between the concave portion and the substrate.

### Effects of the Invention

According to this invention, the heat generated by the substrate on which the light source is mounted can be efficiently released to the outside.

### BRIEF DESCRIPTION OF THE DRAWINGS

FIG. 1 is a front view showing the lighting device for vehicle of the present embodiment.
FIG. 2 is a top view showing the lighting device for vehicle of the present embodiment.
FIG. 3 is a perspective view showing the lighting device for vehicle of the present embodiment.
FIG. 4 is a perspective view showing the lighting device for vehicle of the present embodiment.
FIG. 5 is a view showing the positional relationship among the groove, the substrate, and the heat conductive material.

### DESCRIPTION OF THE EMBODIMENTS

Hereinafter, embodiments of the present invention will be described with reference to the drawings.

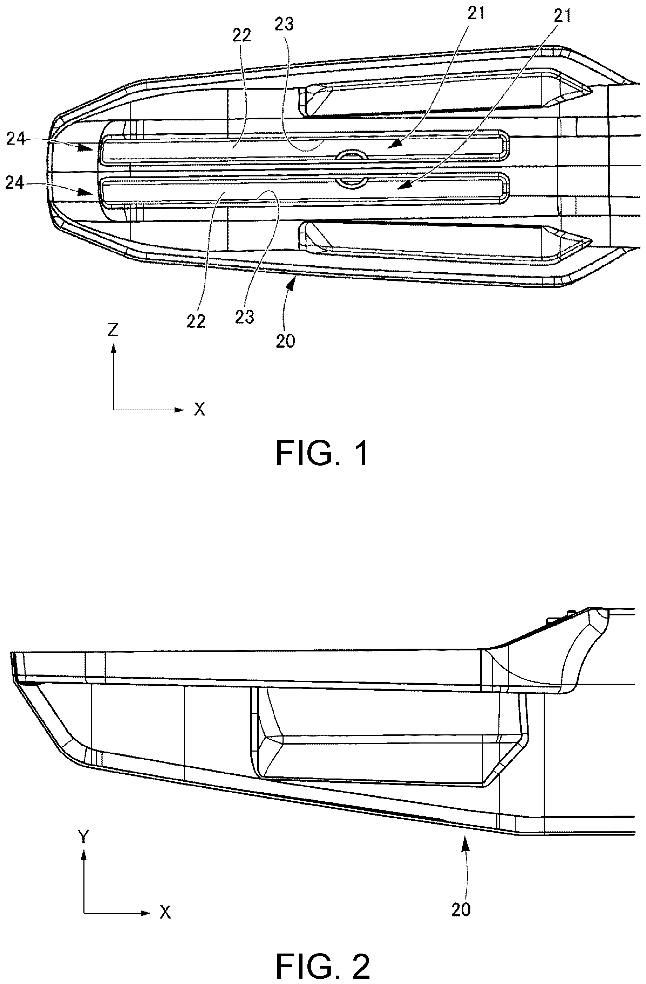

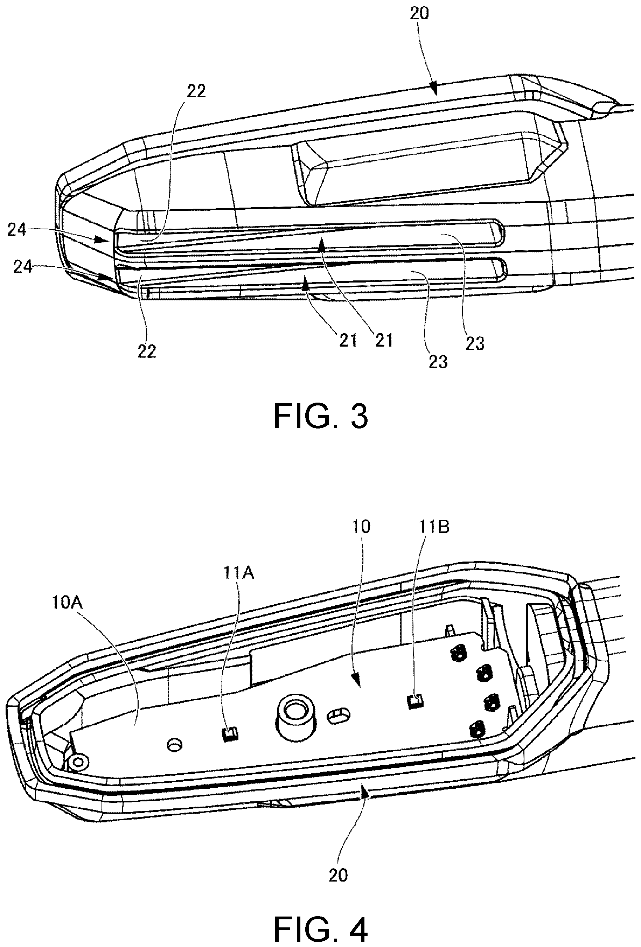

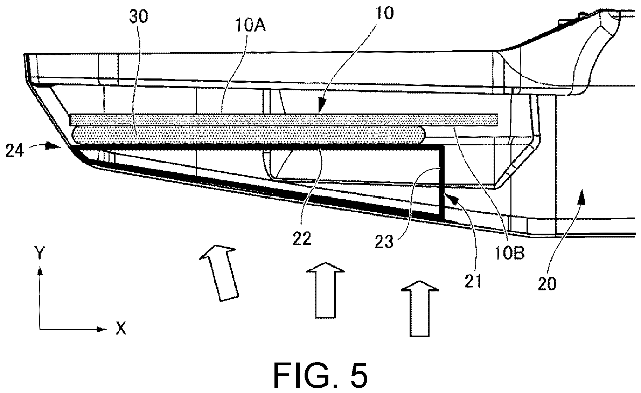

FIG. 1 is a front view showing the lighting device for vehicle of the present embodiment, FIG. 2 is a top view showing the lighting device for vehicle of the present embodiment, FIG. 3 and FIG. 4 are perspective views showing the lighting device for vehicle of the present embodiment, and FIG. 5 is a view showing the positional relationship among the groove, the substrate, and the heat conductive material.

Hereinafter, a lighting device used as the right lamp of a pair of left and right rear lamps for a two-wheeled vehicle is illustrated as an example of the lighting device for vehicle of the present embodiment. Nevertheless, the type and function of the lighting device for vehicle of the present invention are arbitrary.

The lighting device for vehicle of the present embodiment includes a substrate 10 on which a light source 11A and a light source 11B are mounted, and a resin cover 20 covering the substrate 10. The light source 11A and the light source 11B respectively include light emitting diode elements. The light source 11A and the light source 11B are mounted on the side of a surface 10A of the substrate 10. In the present embodiment, the light source 11A functions as a light source for turn signal, while the light source 11B functions as a light source for tail lamp and stop lamp. Additionally, a lens member (not shown) is attached to the resin cover 20 to emit the light from the light source 11A and the light source 11B in a direction Y (the rear of the vehicle body), which is the opposite direction of the travel direction of the vehicle body. Thus, the substrate 10 is accommodated inside the resin cover 20 and the lens member.

The resin cover 20 is formed with a pair of grooves 21 (FIG. 1, FIG. 3, and FIG. 5) as concave portions in a shape that is recessed in the direction Y approaching the substrate 10 as viewed in the direction Y from the outside. The grooves 21 have a constant width with respect to the up-down direction (Z-axis direction) and have a shape extended in the substantially horizontal direction of the vehicle body.

Furthermore, a heat conductive material 30 (FIG. 5) is sandwiched between the grooves 21 and the substrate 10. In FIG. 5, the positions of the grooves 21, the substrate 10, and the heat conductive material 30 are shown overlapping on the top view (FIG. 2) of the resin cover 20. Any material with higher thermal conductivity than air can be used as the heat conductive material 30, but for example, a gap filler filled between the substrate 10 and the resin cover 20 and cured may be used as the heat conductive material 30.

As shown in FIG. 5, each groove 21 has a bottom portion 22 that faces a back surface 10B of the substrate 10 in a Y-axis direction and is formed in a planar shape along the substrate 10. Additionally, each groove 21 has a wall portion 23 that is connected to the outer periphery of the bottom portion 22 and extends in the direction Y. As shown in FIG. 1, the wall portion 23 defines the upper and lower end portions and the X-side end portion of the outer peripheral ends of the groove 21 within the XZ plane. On the other hand, each groove 21 has a cutout portion 24 at the -X-side end portion where the wall portion 23 is not formed.

As described above, the resin cover 20 has the grooves 21 formed in a shape that is recessed in the direction approaching the substrate 10. Therefore, the bottom portions 22 of the grooves 21 can be brought close to the back surface 10B of the substrate 10. Furthermore, in the present embodiment, the heat conductive material 30 is disposed between the back surface 10B of the substrate 10 and the bottom portions 22. Therefore, the heat generated by the substrate 10, including the heat generated by the light source 11A and the light source 11B, can be efficiently released to the outside of the resin cover 20 through the heat conductive material 30 and the bottom portions 22 (resin cover 20). Therefore, for example, it is possible to avoid using a cover made of metal or the like, which excels in thermal conductivity but invites cost increase, instead of the resin cover 20.

In addition, during the travel of a two-wheeled vehicle, the resin cover 20 receives wind in the direction Y, causing the outside air to enter into the grooves 21. Furthermore, the outside air flows along the bottom portions 22 and is discharged from the grooves 21 through the cutout portions 24. Therefore, the outside air can flow smoothly along the bottom portions 22 and effectively cool the bottom portions 22 from the outside. Consequently, the heat generated by the substrate 10 can be effectively released to the outside.

In the lighting device for vehicle of the present embodiment, components are also mounted on the back surface 10B of the substrate 10 to miniaturize the device. However, it is possible to use, for example, a material that takes a shape corresponding to the uneven shapes of the components, such as gap filler, as the heat conductive material 30. In this case, a state where the heat conductive material 30 is in contact can be achieved over a wide area of the back surface 10B of the substrate 10, so the substrate 10 can be efficiently cooled.

At least a portion of the heat conductive material 30 may use a metal material. Additionally, at least a portion of the heat conductive material 30 may use a heat dissipation member (such as a heat sink) made of metal. For example, a heat sink may be disposed in contact with the bottom portion 22 (resin cover 20).

Furthermore, the bottom portion 22 may be formed into an uneven shape that conforms to the shapes of the components mounted on the back surface 10B of the substrate 10. In this case, the gap between the substrate 10 including the components and the bottom portion 22 can be reduced across the entire substrate 10. Therefore, the thickness of the heat conductive material 30 can be suppressed, and the cooling effect of the substrate 10 can be enhanced. It should be noted that, in this case, a material that takes a shape corresponding to the uneven shapes of the components can also be used as the heat conductive material 30.

In addition, in the region where components are not mounted and the back surface 10B of the substrate 10 is exposed, the bottom portion 22 may be formed in such a shape that the inner surface of the resin cover 20 is in contact with the back surface 10B. Moreover, the bottom portion 22 may be formed in such a shape that the inner surface of the resin cover 20 is in contact with the surfaces of the components mounted on the back surface 10B. In these cases, the cooling effect of the substrate 10 can be further enhanced through heat conduction via the region where the inner surface of the resin cover 20 is in direct contact with the back surface 10B or the components. It should be noted that a predetermined thermally conductive material (for example, silicone grease) may be disposed or applied in the relevant region.

In the lighting device for vehicle of the present embodiment, relatively narrow grooves 21 (width in the up-down direction) are formed as concave portions of the resin cover 20. Therefore, contact of hands or fingers with the interior of the grooves 21, especially the high-temperature bottom portions 22, can be avoided. Additionally, by forming multiple (a pair of) grooves 21 in the resin cover 20, the width of each individual groove 21 can be suppressed while increasing the area of the bottom portions 22 facing the substrate 10. Thereby, the required cooling effect can be ensured.

As described above, according to the present embodiment, the resin cover 20 has the grooves 21 formed in a shape that is recessed in the direction approaching the substrate 10. Therefore, the bottom portions 22 of the grooves 21 can be brought close to the back surface 10B of the substrate 10. Additionally, the heat conductive material 30 is disposed between the back surface 10B of the substrate 10 and the bottom portions 22. Therefore, the heat generated by the substrate 10, including the heat generated by the light source 11A and the light source 11B, can be efficiently released to the outside of the resin cover 20 through the heat conductive material 30 and the bottom portions 22 (resin cover 20).

Regarding the above embodiments of the present invention, the following additional notes are disclosed.

### [Additional note 1]

A lighting device for vehicle, including:
a substrate (10) on which a light source (11A, 11B) is mounted; and
a resin cover (20) covering the substrate,
in which the resin cover has a concave portion (21) formed in a shape that is recessed in a direction approaching the substrate as viewed from outside, and
a heat conductive material (30) is disposed between the concave portion and the substrate.

According to the configuration described in additional note 1, the concave portion and the substrate can be brought close to each other. In addition, the heat conductive material is disposed between the substrate and the concave portion. Therefore, the heat generated by the substrate can be efficiently released to the outside through the heat conductive material and the resin cover. It should be noted that, in the present invention, the type of the vehicle is arbitrary and the vehicle is not limited to a two-wheeled vehicle. Additionally, the shape of the concave portion is arbitrary and is not limited to a groove shape. The number of the concave portions is also arbitrary. Furthermore, the type and number of the light sources are also arbitrary.

### [Additional note 2]

The lighting device for vehicle described in additional note 1, in which the direction is opposite to a travel direction of a vehicle body.

According to the configuration described in additional note 2, during the travel of the vehicle, travel wind blows into the concave portion, so the cooling effect of the substrate can be enhanced.

### [Additional note 3]

The lighting device for vehicle described in additional note 2, in which the concave portion is defined by a wall portion (23) extending with respect to the direction, and has a cutout portion (24) where the wall portion is not formed.

According to the configuration described in additional note 3, the travel wind blown into the concave portion can escape through the cutout portion, so the cooling effect of the substrate can be further enhanced.

### [Additional note 4]

The lighting device for vehicle described in additional note 1, in which the concave portion has a bottom portion (22) that faces the substrate and is formed in a planar shape along the substrate.

According to the configuration described in additional note 4, the heat generated by the substrate can be released to the outside through the bottom portion formed in a planar shape.

### [Additional note 5]

The lighting device for vehicle described in additional note 1, in which the concave portion has a bottom portion that faces the substrate and is formed in an uneven shape corresponding to a mounting state of the substrate.

According to the configuration described in additional note 5, the bottom portion can be brought close to the substrate over the entire substrate, so the cooling effect of the substrate can be enhanced.

### [Additional note 6]

The lighting device for vehicle described in additional note 1, in which the concave portion has a region where an inner surface of the resin cover is in contact with the substrate.

According to the configuration described in additional note 6, the heat generated by the substrate can be effectively released to the outside through the region where the inner surface of the resin cover is in contact with the substrate.

### [Additional note 7]

The lighting device for vehicle described in additional note 1, in which the concave portion is formed as a groove that extends in a substantially horizontal direction of a vehicle body.

According to the configuration described in additional note 7, by setting the width of the groove to be small, contact of hands or fingers with the interior of the concave portion can be avoided.

### Reference Signs List

- 10: substrate
- 11A, 11B: light source
- 20: resin cover
- 21: groove (concave portion)
- 22: bottom portion
- 23: wall portion
- 30: heat conductive material

## Claims

1. A lighting device for vehicle, comprising:
a substrate (10) on which a light source (11A, 11B) is mounted; and
a resin cover (20) covering the substrate,
wherein the resin cover has a concave portion (21) formed in a shape that is recessed in a direction approaching the substrate as viewed from outside, and
a heat conductive material (30) is disposed between the concave portion and the substrate.

2. The lighting device for vehicle according to claim 1, wherein the direction is opposite to a travel direction of a vehicle body.

3. The lighting device for vehicle according to claim 2, wherein the concave portion is defined by a wall portion (23) extending with respect to the direction, and has a cutout portion (24) where the wall portion is not formed.

4. The lighting device for vehicle according to claim 1, wherein the concave portion has a bottom portion (22) that faces the substrate and is formed in a planar shape along the substrate.

5. The lighting device for vehicle according to claim 1, wherein the concave portion has a bottom portion that faces the substrate and is formed in an uneven shape corresponding to a mounting state of the substrate.

6. The lighting device for vehicle according to claim 1, wherein the concave portion has a region where an inner surface of the resin cover is in contact with the substrate.

7. The lighting device for vehicle according to claim 1, wherein the concave portion is formed as a groove that extends in a substantially horizontal direction of a vehicle body.
